# EUROPÄISCHE PATENTANMELDUNG

(11) **EP 4 704 375 A1**
(43) Veröffentlichungstag der Anmeldung: **04.03.2026**
(21) Anmeldenummer: 25194237.1
(22) Anmeldetag: 06.08.2025
(51) Int. Cl.: H04L 9/32

(54) **ABSICHERUNG VON IN EINEM TOKEN GESPEICHERTEN DATEN DURCH ERGÄNZUNG EINER SIGNATUR**

(30) Priorität: 30.08.2024 DE 102024002897
(71) Anmelder: Bundesdruckerei GmbH, 10969 Berlin (DE)
(72) Erfinder: Morgner, Frank, 10969 Berlin (DE)

(57) **Zusammenfassung**

Die Erfindung betrifft Verfahren und elektronische System zur Ergänzung und Überprüfung einer ergänzenden kryptographischen Signatur in einem digitalen Token. Hierzu wird nach gegenseitiger Authentisierung des digitalen Tokens und eines Terminals eine ergänzende kryptographische Signatur durch eine Signaturvorrichtung auf Basis eines bisher nicht für dieses digitale Token verwendeten geheimen Schlüssels erstellt und im digitalen Token gespeichert. Die ergänzende Signatur kann dann unter Verwendung eines zugeordneten öffentlichen Schlüssels verifiziert werden.

## Beschreibung

Die vorliegende Erfindung betrifft ein Verfahren und System zur Absicherung der auf einem Token gespeicherten Daten. Insbesondere betrifft die vorliegende Erfindung Verfahren zur Ergänzung einer neuen kryptographischen Signatur in einem Token, ein Verfahren zur Überprüfung der Echtheit der im Token gespeicherten Daten unter Verwendung der neuen Signatur, sowie entsprechende Anordnungen und Systeme.

Aus dem Stand der Technik ist die Verwendung von Chipkarten und weiterer ID Token zur Identitätsprüfung bekannt. Diese ID Token, wie beispielsweise Reisepässe, Personalausweise oder andere ID-Dokumente haben einen Mikroprozessor und einen integrierten Speicher in dem unter anderem, neben Programminstruktionen, persönliche Daten gespeichert sind, die bei Kontrollen durch ein Lesegerät, welches über die entsprechenden Berechtigungen verfügt, nach erfolgreicher Ausführung einiger Programminstruktionen, ausgelesen werden können um die Identität des Token-Besitzers zu verifizieren.

Um eine Manipulation der in einem Token gespeicherten persönlichen Daten zu verhindern, können die persönlichen Daten durch verschiedene Mechanismen geschützt werden. Eine Option für den Schutz von Daten vor Manipulation ist die Erstellung einer kryptographischen Signatur über den Daten.

Diese Verfahren, welches auch als "Passive Echtheitsprüfung" bezeichnet wird, wird aktuell Rahmen des Dokuments 9303 der International Civil Aviation Organization (ICAO) zur Überprüfung der Echtheit der gespeicherten Identitätsdaten vorgegeben. Zur Erstellung der Signatur wird im Stand der Technik ein auf Elliptischen-Kurven-Kryptographie (Elliptic Curve Cryptography, ECC) basierender privater Schlüssel verwendet, der gegenüber aktuell verfügbaren Berechnungsverfahren als sicher gilt.

Vor dem Hintergrund der zunehmenden Forschung und Entwicklung im Bereich der Quantencomputer, besteht jedoch das Risiko, dass eine Entschlüsselung des privaten Schlüssels und somit eine Erstellung manipulierter ID Tokens innerhalb der nächsten Jahre möglich werden könnte. Da ID Tokens, insbesondere Reisepässe und andere hoheitliche Dokumente generell eine lange Laufzeit und Gültigkeit haben, besteht somit eine Aufgabe darin, zusätzliche Sicherheitsmechanismen für ID Tokens zu entwickeln, die selbst im Fall eines kryptographisch relevanten Quantencomputers eine Überprüfung der Echtheit, bzw. Manipulationsfreiheit der auf einem ID Token gespeicherten Daten ermöglicht.

Die Aufgabe der vorliegenden Erfindung besteht somit darin, die auf einem ID Token gespeicherten Daten zusätzlich zu den bereits vorhandenen Schutzmechanismen abzusichern.

Diese Aufgabe wird durch das Verfahren und das System gemäß den unabhängigen Ansprüchen gelöst. Bevorzugte Ausführungsformen der Erfindung ergeben sich aus den in den Unteransprüchen genannten Merkmalen und weiterhin auch aus der vorliegenden Offenbarung als Ganzes.

Ein erster Aspekt der Erfindung betrifft ein Verfahren zur Ergänzung einer ergänzenden kryptographischen Signatur in einem digitalen Token, wobei das digitale Token eine Datenstruktur umfasst. Das Verfahren umfasst die folgenden Schritte:
- Gegenseitige Authentisierung des digitalen Tokens und eines Terminals;
- Empfangen, durch das Terminal, von Auslesedaten der Datenstruktur des digitalen Tokens;
- Übermitteln, durch das Terminal, eines Hashwertes von zumindest einem Teil der Datenstruktur an eine Signaturvorrichtung, wobei der Hashwert Teil der Auslesedaten ist oder auf Basis der Auslesedaten erzeugt wurde;
- Erstellen der ergänzenden kryptographischen Signatur für den Hashwert durch die Signaturvorrichtung unter Verwendung eines geheimen Schlüssels der Signaturvorrichtung, wobei der geheime Schlüssel sich von bisher für das digitale Token verwendeten kryptographischen Schlüsseln unterscheidet;
- Übertragen der ergänzenden kryptographischen Signatur an das digitale Token; und
- Speichern der ergänzenden kryptographischen Signatur in einem Speicher des digitalen Tokens.

Vor der weiteren Beschreibung der Verfahrensschritte werden zunächst die verwendeten Begriffe definiert und erklärt.

Der Begriff "Token" bezeichnet vorliegend jegliche Realisierung eines tragbaren Mikrocomputers mit einer externen Schnittstelle, einem Mikroprozessor und einem nicht-flüchtigen Speicher, der mittelbar über die externe Schnittstelle einer äußeren Lese- und/oder Schreiboperation zugänglich ist.

Unter einem "Token", welches auch als "ID-Token" bezeichnet wird, wird hier insbesondere ein tragbares elektronisches Gerät verstanden, welches beispielsweise zumindest einen geschützten elektronischen Datenspeicher zur Speicherung von Daten und eine Kommunikations-Schnittstelle zum Auslesen der Daten aufweist. Der Speicherbereich ist beispielsweise geschützt, um zu verhindern, dass das in dem Speicherbereich gespeicherte Daten in unerlaubter Weise verändert oder ohne die dafür erforderliche Berechtigung ausgelesen wird. Mit anderen Worten kann auf den Speicherbereich nur dann zugegriffen werden, wenn eine hierzu erforderliche Zugriffberechtigung gegeben ist.

Der Token kann eine Kommunikationsschnittstelle aufweisen und einen Mikroprozessor, der über einen internen Datenbus mit dem geschützten Speicherbereich verbunden ist. Ein externer Zugriff auf den geschützten Speicherbereich über die Kommunikationsschnittstelle kann nur über den Prozessor erfolgen, nachdem der Prozessor durch Ausführung eines Programms das Vorliegen der entsprechenden Zugriffberechtigung geprüft hat.

Die Kommunikationsschnittstelle ist somit eine Schnittstelle, über die Daten empfangen und gesendet werden können, wobei die Kommunikationsschnittstelle kontaktbehaftet oder kontaktlos konfiguriert sein kann, beispielsweise nach einem RFID- und/oder NFC-Standard. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Insbesondere kann es sich bei dem Token um einen USB-Stick, eine Chipkarte oder ein anderes Secure Element (SE), wie beispielsweise von Global Platform (www.globalplat-form.org) spezifiziert, handeln oder um ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise wie Zugangskarten, in die ein Datenspeicher zur Speicherung von Daten integriert ist. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Der Begriff "externe Schnittstelle" wird hinsichtlich eines Tokens verwendet für jede technische Einrichtung zum Austausch von digital codierten Daten zwischen dem Token und einer davon getrennten Datenverarbeitungseinrichtung. Beispiele für externe Schnittstellen eines Tokens sind die aus den Bank- und Kreditkarten bekannten Kontaktfelder und die aus dem Bereich der elektronischen Ausweisdokumente bekannte RFID-Schnittstellen zur hochfrequenten drahtlosen Signalübertragung.

Unter "Verwaltungsdaten", die alternativ auch als "Kontrolldaten" bezeichnet werden können, im nicht-flüchtigen Speicher eines Tokens werden im Gegensatz zu Nutzdaten Verwaltungsdaten verstanden, die insbesondere eine Zugriffsbedingung für den Zugriff auf die Nutzdaten festlegen. Ferner können die Verwaltungsdaten auch eine Angabe der Position der betreffenden Datei in dem Dateisystem des Tokens beinhalten, beispielsweise in Form eines Zeigers auf den jeweiligen Nachfolgerknoten in dem Dateibaum des Tokens, sowie z.B. einen Dateibezeichner (engl.: File Identifier, FID) und einen Applikationsbezeichner (engl.: Application Identifier, AID).

Unter "Nutzdaten" werden hier insbesondere solche Daten im nicht-flüchtigen Speicher eines Tokens verstanden, die ein mit dem Token interoperables Anwendungsprogramm eines Terminals benötigt, wie zum Beispiel biometrische Daten, insbesondere Fingerabdruckdaten, Gesichtsbiometriedaten und/oder Irisscandaten, die ein Terminal für eine biometrische Authentifizierung benötigt.

Die auf dem Token gespeicherten Daten (Nutzdaten und Verwaltungsdaten) können in Form einer sogenannten "Datenstruktur" abgespeichert sein. Mit einer "Datenstruktur" sind hierbei strukturiert abgespeicherte Daten gemeint, die beispielsweise in einer Baumstruktur oder in einer Sequenz gespeichert sind.

Unter einer "Datengruppe" wird weiterhin ein Element der Datenstruktur verstanden, welches einen oder mehrere Datenwerte beinhalten kann. Datengruppen können beispielsweise als Datengruppen im Sinne der ICAO Spezifikation 9303 verstanden werden.

Der "Adressbereich" eines nicht-flüchtigen Speichers eines Tokens ist die Menge der Binärbezeichner, nämlich der Adressen, mit denen der Mikroprozessor des Tokens die Einheiten des nicht-flüchtigen Speichers in Zugriffsoperationen auswählt. Typisch werden die Adressen vom Mikroprozessor auf einem Register und/oder über einen Befehlsparameter gebildet. In Token ohne Speicherverwaltungseinheit (Memory Management Unit, MMU) erscheinen die Adressen direkt auf dem Datenbus. Dies ist jedoch nicht vorausgesetzt. Auch im Fall einer Virtualisierung des Speicherzugriffs durch eine Speicherverwaltungseinheit und/oder einer Verwürfelung (engl.: scrambling) der Speicherzugriffe wird vorliegend als Adressbereich die Menge der virtuellen und/oder verwürfelten Adressen verstanden, mit denen ein tatsächlich verfügbares Speicherelement auf der Stufe der Prozessorlogik für einen Zugriffsbefehl auswählbar ist.

Als "Fragment" wird ein maximal-zusammenhängender Adressbereich innerhalb des freien nicht-flüchtigen Speichers bezeichnet. Dabei bedeutet maximal zusammenhängend, dass weder die dem Fragment vorangehende noch die dem Fragment nachfolgende Adresse zum freien nicht-flüchtigen Speicher gehört.

Als "Metadaten" werden Daten im nicht-flüchtigen Speicher eines Tokens bezeichnet, mit denen Einzelheiten zur Speicherung von Nutzdaten beschreiben sind. Deshalb muss für die Speicherverwaltung eine eindeutige Verbindung zwischen Metadaten und den dadurch beschriebenen Nutzdaten herleitbar sein. Eine solche eindeutige Verbindung wird beispielsweise durch eine Datenorganisation verwirklicht, bei der die Metadaten als Header fester oder bestimmbarer Länge im logischen Adressbereich den Nutzdaten vorausgehen.

Als "Datei" wird vorliegend eine selbstbeschreibende strukturierte oder strukturierbare Zusammenstellung von Daten bezeichnet. Der zur Beschreibung der Datei dienende Teil der Daten sind Metadaten. Der darüber hinaus gehende Teil der Daten sind Nutzdaten.

Als "Verweisstruktur" wird eine strukturierte oder strukturierbare Zusammenstellung von Adressen mit Verweisen auf andere Daten bezeichnet.

Als "Zugriffslogik" wird ein abstraktes, programmtechnisch realisierbares Ordnungsschema für den Zugriff auf Daten in einem Speicher verstanden. In diesem Sinne ist eine Verweisstruktur eine besondere Zugriffslogik, nämlich eine in den gespeicherten Daten abgebildete Zugriffslogik. Andere Realisierungen einer Zugriffslogik können prozedural oder objektorientiert sein.

Als "Dateisystem" wird eine zum Zeitpunkt der Herausgabe des Tokens bereits wenigstens im Ansatz angelegte Struktur aus Verwaltungsdaten im nicht-flüchtigen Speicher angesehen. Typische Token sind zum Zeitpunkt der Herausgabe mit programmtechnischen Einrichtungen ausgestattet, die eine Erweiterung oder allgemeine Veränderung des Dateisystems unter Beibehaltung des unterliegenden abstrakten Ordnungsschemas zu späteren Zeitpunkten erlauben. Wiederum typisch werden diese programmtechnischen Einrichtungen als Teile einer hardwarespezifischen programmtechnischen Grundausrüstung bereitgestellt, die auch als Chipkartenbetriebssystem bezeichnet wird. Für weitere Einzelheiten zum Aufbau und insbesondere zur Zugriffslogik in typischen Dateisystemen für Token wird auf die Norm ISO/IEC 7816-4 verwiesen.

Unter einem "Terminal" wird hier ein elektronisches Gerät verstanden, welches ein Lesegerät umfasst, das einen Lesezugriff und/oder einen Schreibzugriff auf das Token ermöglicht, beispielsweise in Form eines sogenannten Chipkartenterminals. Das Terminal mit dem Lesegerät kann einen integralen Bestandteil eines Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln. Das Lesegerät kann mit einer kontaktlosen und/oder kontaktbehafteten Schnittstelle zum Datenaustausch mit einem Token ausgestattet ist.

Nach Ausführungsformen weist der ID-Token keine eigene Energieversorgung auf. Als Energiequelle kann vielmehr eine Vorrichtung zum "Ernten" (energy harvesting) von Energie dienen, welche von dem Terminal an das ID Token übertragen wird, wie beispielsweise eine RFID-Antenne.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhaltet und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystemen dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikates, des sogenannten Wurzelzertifikats, und des durch dieses zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Unter einer "Dokumenten-PKI" wird hier eine public key infrastructure (PKI) verstanden, die zur Erstellung von Zertifikaten für ID-Token, also Dokumente, dient, wobei die Zertifikate zur Prüfung der Authentizität des betreffenden ID-Tokens verwendet werden.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem privaten Schlüssel, welcher zur Verschlüsselung von Daten verwendet wird und im Regelfall geheim gehalten werden muss, und einem öffentlichen Schlüssel, welcher an Dritte, beispielsweise an einen Dienstanbieter und/oder einen ZDA, weitergegeben werden darf. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen.

Bei symmetrischen Schlüsseln verwenden beide Teilnehmer des entsprechenden symmetrischen Kryptosystems denselben Schlüssel. Bei manchen symmetrischen Verfahren sind die beiden Schlüssel nicht identisch, aber können leicht auseinander berechnet werden. Symmetrische Schlüssel werden beispielsweise zum Berechnen von Message Authentication Codes (MAC) verwendet.

Unter einem "statischen" Schlüssel wird im Folgenden ein kryptografischer Schlüssel bzw. Datenwert verstanden, welcher in einem nichtflüchtigen Speichermedium gespeichert ist und für mehr als nur einer Sitzung Verwendung finden kann. Im Gegensatz dazu werden "ephemere" Schlüssel, d.h. temporäre kryptografischer Schlüssel bzw. Datenwerte, nur für eine Sitzung generiert und nicht permanent gespeichert, sodass sie in einer weiteren Sitzung nicht mehr verwendet werden können.

Unter einem "statischen" Zertifikat wird im Folgenden ein digitales Zertifikat verstanden, welches für mehr als nur einer Sitzung Verwendung finden kann. Ein statisches Zertifikat kann beispielsweise einen statischen öffentlichen Schlüssel umfassen und mittels eines statischen privaten Schlüssels signiert sein. Im Gegensatz dazu werden "ephemere" Zertifikate mittels temporärer Schlüssel nur für eine Sitzung generiert, sodass sie in einer weiteren Sitzung nicht mehr verwendet werden können.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" oder "elektronische Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem einem Zertifikat zugeordneten privaten Schlüssel eines kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Unter einer "Sicherheitsdomäne" wird hier eine Computerinfrastruktur verstanden, welche kryptographisch und/oder physikalisch gegen unerlaubte Zugriffe seitens Dritter geschützt ist. Bei einer Sicherheitsdomäne kann es sich demnach um eine Mehrzahl von Programmen mit kryptographisch gesicherter Kommunikation untereinander, einen gesicherten Speicherbereich eines Computers handeln, einen allein stehenden (stand alone) Computer mit abgesicherten Zugriffsmöglichkeiten, wie beispielsweise einer Firewall, Passwortabfrage, kryptographischen Verschlüsselung, oder ein abgesichertes Netzwerk, welches abgesicherten Zugriffsmöglichkeiten und kryptographisch verschlüsselte Kommunikationskanäle umfasst, wie beispielsweise VPN.

In dem Verfahren des ersten Aspekts der Erfindung kann die gegenseitige Authentisierung des digitalen Tokens und des Terminals beispielsweise basierend auf dem Basic Access Control (BAC) Protokoll, basierend auf dem Extended Access Control (EAC) Protokolls oder auf Basis des Password Authenticated Connection Establishment (PACE) Protokolls erfolgen. Informationen zu diesen Protokollen werden beispielsweise in der Technischen Richtlinie TR-03110-1 des Bundesamts für Sicherheit in der Informationstechnik offenbart.

Nach der gegenseitigen Authentisierung zwischen digitalem Token und Terminal können Daten zwischen dem Terminal und den digitalen Token ausgetauscht werden. Das Terminal kann somit die Auslesedaten, d.h. die Daten die zur Auslesung in der jeweiligen Implementierung vorgehen sind, empfangen, entweder durch einen Lesezugriff auf das digitale Token oder durch ein Senden der Auslesedaten von dem digitalen Token an das Terminal.

Nachfolgend kann das Terminal einen Hashwert eines Teils der ausgelesenen Datenstruktur an die Signaturvorrichtung übersenden. Der Hashwert kann hier ein Teil der Auslesedaten sein, d.h. der Hashwert war auf dem digitalen Token gespeichert und wurde vom Terminal empfangen. Alternativ kann der Hashwert basierend auf den Auslesedaten vom Terminal erzeugt worden sein. In diesem Fall kann das Verfahren optional den Schritt des Erzeugens des Hashwertes basierend auf zumindest einem Teil der Auslesedaten durch das Terminal umfassen. Weiterhin ist es alternativ auch möglich, dass die Signaturvorrichtung den Hashwert basierend auf an die Signaturvorrichtung übermittelten Auslesedaten des digitalen Tokens selber erzeugt.

Die Signaturvorrichtung verwendet dann den Hashwert um die ergänzende kryptographische Signatur, nachfolgend auch als ergänzende Signatur bezeichnet, zu erstellen unter Verwendung eines geheimen Schlüssels der Signaturvorrichtung, auch als "geheimer Signaturschlüssel" bezeichnet. Der geheime Signaturschlüssel ist beispielsweise im internen Speicher der Signaturvorrichtung gespeichert oder in einem anderen sicheren Speicher, auf den die Signaturvorrichtung Zugriff hat. Der verwendete geheime Schlüssel unterscheidet sich hierbei von denen bisher für das digitale Token verwendeten kryptographischen Schlüsseln. Unter bisher für das digitale Token verwendeten Schlüsseln werden beispielsweise Schlüssel die auf dem digitalen Token gespeichert sind oder Schlüssel die zur Verschlüsselung oder zur Signatur von auf dem digitalen Token gespeicherten Daten verwendet wurden. Auch extern gespeicherte Schlüssel, die dem digitalen Token zugeordnet sind oder mit Bezug auf das digitale Token gespeichert sind oder verwendet wurden können als bisher her für das digitale Token verwendete Schlüssel verstanden werden. Der geheime Schlüssel wurde somit bisher nicht für das digitale Token verwendet.

Die von der Signaturvorrichtung erstellte ergänzende kryptographische Signatur wird nach ihrer Erstellung an das digitale Token übertragen und somit im digitalen Token ergänzt. Unter Ergänzung der ergänzenden kryptographischen Signatur ist somit ein Hinzufügen der ergänzenden kryptographischen Signatur im digitalen Token gemeint. Hierbei ist es beispielsweise möglich, dass die kryptographische Signatur von der Signaturvorrichtung zunächst an das Terminal übertragen wird, und dann über einen zwischen dem Terminal und dem digitalen Token auf Grundlage der bereits durchgeführten gegenseitigen Authentifizierung bestehenden sicheren Kanal vom Terminal an das digitale Token übertragen wird. Auch eine direkte Übertragung der ergänzenden kryptographischen Signatur von der Signaturvorrichtung an das digitale Token ist möglich unter der Voraussetzung, dass ein entsprechender Kanal zur Datenübertragung existiert.

Die ergänzende kryptographische Signatur wird dann in einem Speicher des digitalen Tokens gespeichert, vorzugsweise persistent gespeichert.

In einer Ausführungsform wird ein Flag ergänzt, das kennzeichnet, dass das digitale Token die ergänzende digitale Signatur beinhaltet. Außerdem wird optional ein digitaler Zeiger auf die ergänzende kryptographische Signatur ergänzt, vorzugsweise in den Verwaltungsdaten des digitalen Tokens. Ein Speicherort der ergänzenden kryptographischen Signatur in dem digitalen Token kann hierbei beispielsweise Teil der Datenstruktur des digitalen Tokens sein, oder es kann ein zusätzlicher sicherer Speicher des digitalen Tokens existieren, der zusätzlich zu der Datenstruktur schützenswerte Daten speichert. Ebenfalls können die Verwaltungsdaten Teil der Datenstruktur sein oder separat von der Datenstruktur auf dem digitalen Token gespeichert sein.

Das Flag und der Zeiger können beispielsweise in Verwaltungsdaten des digitalen Tokens gespeichert werden. Alternativ ist auch eine Speicherung von einem Flag, das als Information über das Vorhandensein einer ergänzenden Signatur in dem digitalen Token verstanden werden kann, auch extern von dem digitalen Token gespeichert werden, beispielsweise in einer externen Datenbank.

Das Speichern der ergänzenden kryptographischen Signatur und/oder das optionale Ergänzen des Flags und das Zeigers können beispielsweise nach der Übertragung der ergänzenden Signatur an das digitale Token durch das digitale Token selbst vorgenommen werden, basierend auf im digitalen Token gespeicherten Programminstruktionen. Alternativ können das Speichern der ergänzenden kryptographischen Signatur und das Hinzufügen des Flags und Zeigers auch durch einen externen Schreibzugriff auf das digitale Token vorgenommen werden, beispielsweise durch einen Schreibzugriff des Terminals unter Verwendung des sicheren Kanals zwischen Terminal und digitalem Token.

Das beschriebene Verfahren hat den Effekt, dass eine kryptographische Signatur auf dem digitalen Token ergänzt werden kann, entweder zusätzlich zu bereits existierenden Signaturen oder erstmalig für digitale Token die vorher keine kryptographische Signatur umfasst haben. Durch eine ergänzende digitale Signatur wird die Manipulationssicherheit der auf dem digitalen Token gespeicherten Daten erhöht, da eine Manipulation nach dem Hinzufügen der ergänzenden kryptographischen Signatur durch Überprüfen der ergänzenden kryptographischen Signatur detektiert werden kann. Das Ergänzen einer ergänzenden kryptographischen Signatur hat zusätzlich den Effekt, dass die zuvor auf dem digitalen Token vorhandenen Sicherheitsmerkmale weiter bestehen bleiben, so dass eine Rückwärtskompatibilität gegeben ist. Da die ergänzende kryptographische Signatur sich auf bereits auf dem digitalen Token vorhandene Auslesedaten bezieht, ist der zusätzliche Speicheraufwand minimal, was angesichts der geringen Speicherkapazitäten des digitalen Tokens einen Vorteil des Verfahrens darstellt.

In einer beispielhaften Ausgestaltung des beschriebenen Verfahrens ist der geheime Schlüssel, der von der Signaturvorrichtung für die Erstellung der ergänzenden kryptographischen Signatur verwendet wird, durch ein kryptographisches Verfahren erzeugt worden, welches sich von kryptographischen Verfahren, die bisher zur Erzeugung der für das digitale Token verwendeten Schlüssel genutzt wurden, unterscheidet. Somit kann die Manipulationssicherheit der auf dem digitalen Token gespeicherten Daten weiter erhöht werden, da für einen Angriff auf die ergänzende kryptographische Signatur ein anderes Angriffsverfahren verwendet werden müsste als für einen Angriff auf die bisher vorhandenen Schutzmechanismen der auf dem digitalen Token gespeicherten Daten. Ein "Angriff" im vorliegenden Sinne ist als kryptographischer Angriff oder Hackerangriff zu verstehen, bei dem versucht wird den für ein Sicherheitsmerkmal verwendeten Schlüssel herauszufinden.

In einer Ausgestaltung wird als geheimer Schlüssel ein Post-Quanten-Schlüssel (PQC-Schlüssel) verwendet. Ein Post-Quanten-Schlüssel hat, im Gegensatz zu einigen standardmäßig verwendeten kryptographischen Verfahren wie RSA oder ECC die Eigenschaft, dass für ihn kein Quantencomputer-basierter Algorithmus bekannt ist, mit dem der Post-Quanten-Schlüssel auf effiziente Art und Weise aus den öffentlich verfügbaren Daten bestimmt werden kann. Somit entsteht durch die Verwendung eines Post-Quanten-Schlüssels zur Ergänzung einer ergänzenden Signatur die Möglichkeit, eine Manipulationssicherheit der im digitalen Token gespeicherten Daten auch in der Gegenwart kryptographisch relevanter Quantencomputer zu gewährleisten. Da digitale Token teilweise sehr lange Laufzeiten von 5 Jahren, 10 Jahren oder mehr haben, ist eine zusätzliche Absicherung der Manipulationssicherheit der Daten von großer Bedeutung.

Beispielsweise kann der geheime Schlüssel basierend auf einem der folgenden asymmetrischen kryptographischen Verfahren erstellt worden sein: gitterbasierte Kryptographie, Hash-basierte Kryptographie, multivariate Polynome, fehlerkorrigierende Codes und/oder supersinguläre elliptische Kurven. Ein zugehöriger öffentlicher Schlüssel kann dann jeweils zur Verifikation der ergänzenden Signatur verwendet werden.

Ein einer beispielhaften Ausgestaltung des beschriebenen Verfahrens kann das digitale Token weiterhin eine erste kryptographische Signatur umfassen, die bereits vor Beginn des Verfahrens auf dem digitalen Token gespeichert war. Die erste kryptographische Signatur wurde in diesem Fall durch eine erste Signaturvorrichtung unter Verwendung eines ersten privaten Schlüssels erstellt. In diesem Fall wird die ergänzende kryptographische Signatur zusätzlich zur ersten kryptographischen Signatur auf dem digitalen Token gespeichert.

Durch die Speicherung der ergänzenden kryptographischen Signatur auf dem digitalen Token zusätzlich zu einer bereits vorhandenen ersten kryptographischen Signatur können Daten, die durch die erste Signatur bereits geschützt waren durch die ergänzende Signatur zusätzlich geschützt werden. Dadurch kann die Manipulationssicherheit erhöht werden und es wird gleichzeitig eine Rückwärtskompatibilität sichergestellt. Somit kann bei einer Überprüfung der auf dem digitalen Token gespeicherten Daten, je nach Ausstattung des jeweiligen Prüfgeräts, die erste Signatur, die ergänzende Signatur oder beide Signaturen verwendet werden. Durch das optional in den Verwaltungsdaten gespeicherte Flag und den Zeiger auf die ergänzende Signatur ist es für ein Prüfgerät, beispielsweise ein Terminal, möglich, nach dem Verbindungsaufbau mit dem digitalen Token, abzufragen ob eine ergänzende Signatur vorhanden ist. Weiterhin können beispielsweise zusammen mit dem Flag oder Zeiger auch Informationen zur Art der ergänzenden Signatur abgelegt sein. Das Prüfgerät kann dann je nach Implementierung des Prüfgeräts oder der jeweiligen rechtlichen und/oder technischen Rahmenbedingungen entscheiden, welche der vorhandenen Signaturen geprüft werden soll. Da die Signatur jedoch in jedem Fall nur die Manipulationsfreiheit der gespeicherten Daten gewährleistet, sollte immer noch eine zusätzliche Überprüfung der Person, die das digitale Token vorlegt, vorgenommen werden, um zu überprüfen, ob die Person zu den auf dem digitalen Token gespeicherten persönlichen Daten passt.

In dem Fall wenn zwei Signaturen auf dem digitalen Token gespeichert werden kann beispielsweise die erste Signatur mit einem ersten privaten Schlüssel basierend auf RSA oder ECC erstellt worden sein. Die zweite Signatur kann beispielsweise basierend auf einem post-quanten-sicheren Schlüssel erstellt worden sein.

Durch eine Kombination einer ersten "klassischen" Signatur basierend auf RSA oder ECC und einer ergänzenden PQC-Signatur kann sowohl Rückwärtskompatibilität als auch Schutz vor Manipulationen durch kryptographisch relevante Quantencomputer gewährleistet werden.

In einer Ausgestaltung können die ergänzende kryptographische Signatur und, falls vorhanden, die erste kryptographische Signatur in einem geschützten Speicherbereich des ID Tokens abgelegt sein. Der geschützte Speicherbereich ist beispielsweise so abgesichert, dass er nur nach einer sicheren Authentisierung mittels vordefinierter Protokolle ausgelesen und/oder beschrieben werden kann. Beispielsweise kann für einen Zugriff auf den geschützten Speicherbereich ein zusätzliches Zertifikat des zugreifenden Geräts, beispielsweise eines Terminals, erforderlich sein. Somit wird die Zahl der Lesezugriffe auf die Signaturen minimiert, was weiterhin die Sicherheit erhöht. Außerdem wird das Risiko unauthorisierter Schreibzugriffe durch einen zusätzlichen Schutz des Speicherbereichs verringert.

In einer Ausgestaltung kann das digitale Token beispielsweise ein Sicherheitsobjekt umfassen, welches im Speicher des digitalen Tokens, vorzugsweise in einem geschützten Bereich des Speichers, abgelegt sein kann. Das Sicherheitsobjekt kann mindestens einen Hashwert umfassen, der über zumindest einem Teil der Datenstruktur gebildet wurde. Weiterhin kann das Sicherheitsobjekt die erste kryptographische Signatur umfassen, welche basierend auf dem mindestens einen Hashwert gebildet wurde. Falls mehrere Hashwerte von dem Sicherheitsobjekt umfasst werden, so kann bei der Generierung der ergänzenden Signatur eine Kombination der Hashwerte verwendet werden. Weiterhin kann die ergänzende kryptographische Signatur ebenfalls in dem Sicherheitsobjekt gespeichert werden. Das Sicherheitsobjekt kann beispielsweise Teil der Datenstruktur sein oder alternativ zusätzlich zur Datenstruktur auf dem digitalen Token gespeichert sein. Das Verwenden eines vordefinierten Sicherheitsobjekts zum Speichern der sicherheitsrelevanten Signaturen und zugehörigen Hashwerte hat den zusätzlichen Effekt, dass eine Standartisierung des Speicherstruktur geschaffen wird, die es unterschiedlichen Anbietern erlaubt den Zugriff auf die relevanten Daten zu implementieren, ohne weitere Informationen über die interne Datenorganisation des digitalen Tokens zu benötigen. Auch kann somit die ICAO Standardisierung für maschinen-lesbare Reisedokumente, wie oben bereits erwähnt, umgesetzt werden.

Ein weiterer Aspekt dieser Schutzrechtsanmeldung betrifft ein Verfahren zur Überprüfung der Echtheit einer auf einem digitalen Token gespeicherten Datenstruktur, wobei das digitale Token eine ergänzende kryptographische Signatur umfasst, die wie oben beschrieben ergänzt wurde. Das Verfahren zur Überprüfung der Echtheit der gespeicherten Datenstruktur bzw. der darin enthaltenen Daten umfasst die folgenden Schritte.
- Gegenseitige Authentisierung des digitalen Tokens und eines zweiten Terminals;
- Bestimmen, durch das zweite Terminal, eines Vorhandenseins der ergänzenden kryptographischen Signatur auf dem digitalen Token sowie eines Speicherorts der ergänzenden kryptographischen Signatur auf dem digitalen Token;
- Auslesen mindestens eines Teils der Datenstruktur des digitalen Tokens durch einen Lese-Zugriff des zweiten Terminals, der ausgelesene Teil der Datenstruktur umfassend zu verifizierende Daten;
- Auslesen, durch einen Lese-Zugriff des zweiten Terminals, der ergänzenden kryptographischen Signatur unter Verwendung des bestimmten Speicherorts;
- Verifizieren, durch das zweite Terminal, der Echtheit der zu verifizierenden Daten unter Verwendung der ergänzenden kryptographischen Signatur und einem der ergänzenden kryptographischen Signatur zugeordneten öffentlichen Schlüssel.

Die gegenseitige Authentisierung zwischen dem digitalen Token und dem zweiten Terminal kann wie oben bereits für das Terminal beschrieben umgesetzt werden. Das zweite Terminal ist hierbei ein weiteres Terminal, das zur Überprüfung der Signatur eingesetzt wird, beispielsweise im Rahmen einer Personenkontrolle bei der das digitale Token vorgelegt wird. Das zweite Terminal war im Allgemeinen nicht an der Ergänzung der ergänzenden Signatur beteiligt.

Das zweite Terminal kann nach der Authentisierung auf die Daten des digitalen Tokens lesend zugreifen. Alternativ können Daten auch vom digitalen Token an das zweite Terminal gesendet werden. Das zweite Terminal bestimmt zunächst das Vorhandensein einer ergänzenden Signatur auf dem digitalen Token sowie eines Speicherorts der ergänzenden kryptographischen Signatur. Beispielsweise kann dies mittels eines Flags erfolgen, welches aus Verwaltungsdaten des digitalen Tokens oder aus einem externen Speicher durch das zweite Terminal ausgelesen werden kann. Danach kann das zweite Terminal zu verifizierende Daten aus dem digitalen Token empfangen oder auslesen. Die zu verifizierenden Daten sind hierbei Teil von Auslesedaten des digitalen Tokens.

Das zweite Terminal kann weiterhin die ergänzende kryptographische Signatur aus dem digitalen Token auslesen oder empfangen. Dazu kann der vorher bestimmte Speicherort verwendet werden. Beispielsweise kann der Speicherort in Form eines einem Flag zugeordneten digitalen Zeigers auf die Speicheraddresse der ergänzenden kryptographischen Signatur hinterlegt sein.

Mit der Signatur und den zu verifizierenden Daten kann dann die Echtheit der zu verifizierenden Daten durch das zweite Terminal unter Verwendung eines der ergänzenden kryptographischen Signatur zugeordneten öffentlichen Schlüssels verifiziert werden. Hierzu hat das zweite Terminal beispielsweise den öffentlichen Schlüssel in einem internen Speicher abgelegt oder kann über einen Onlinedienst darauf zugreifen. Optional kann das Verfahren einen weiteren Schritt umfassen, in dem das zweite Terminal basierend auf dem Flag oder anderen der ausgelesenen ergänzenden kryptographischen Signatur zugeordneten Informationen den benötigten öffentlichen Schlüssel ausliest, herunterlädt, anfordert und/oder empfängt.

Das Verfahren zur Überprüfung der Echtheit der Daten des digitalen Tokens basierend auf der ergänzenden Signatur hat den Effekt, dass die Sicherheit erhöht wird.

Zusätzlich ist es auch möglich, dass das zweite Terminal eine evtl. auf dem digitalen Token gespeicherte erste Signatur zusätzlich zu überprüfen, entweder vor der Überprüfung der ergänzenden Signatur oder im Anschluss daran. Die Überprüfung mehrerer Signaturen hat die vorteilhafte Wirkung einer weiteren Erhöhung der Sicherheit, da eine Manipulation bereits detektiert werden kann, wenn nur eine einzige Signatur nicht korrekt für die signierten Auslesedaten ist.

Zu beachten ist hierbei, dass durch das beschriebene Verfahren die Echtheit im Sinne der Manipulationsfreiheit überprüft wird. D.h. anhand der Signatur kann überprüft werden, ob die gespeicherten Daten zu der Signatur passen. Ist dies der Fall so wurden die gespeicherten Daten mit an Sicherheit grenzender Wahrscheinlichkeit nicht verändert, alles unter der Voraussetzung, dass die Signatur sicher ist, was vor allem darauf beruht, dass der zur Erstellung der Signatur verwendete geheime Schlüssel nicht bekannt ist und auch nicht mit effizienten Verfahren bestimmt werden kann.

Bei einer Personenkontrolle müssen daher, nach der Überprüfung der Echtheit der auf dem digitalen Token gespeicherten personenbezogenen Daten, die personenbezogenen Daten noch mit der Person abgeglichen werden, da die Signatur nur die Manipulation aber nicht das Kopieren der Daten des digitalen Tokens verhindert.

In einem weiteren Aspekt umfasst die vorliegenden Schutzrechtsanmeldung ein elektronisches System zur Ergänzung einer ergänzenden kryptographischen Signatur in einem digitalen Token. Das elektronische System umfasst das digitale Token, ein Terminal und eine Signaturvorrichtung. Im Folgenden wird das elektronische System zur Ergänzung der ergänzenden kryptographischen Signatur auch als "erstes elektronisches System" bezeichnet.

Das digitale Token umfasst eine Datenstruktur, und ist konfiguriert zur Durchführung der folgenden Schritte:
- Authentisieren gegenüber dem Terminal;
- Aufbauen einer Lese-Schreib-Verbindung mit dem Terminal; und
- Speichern einer vom Terminal übertragenen ergänzenden kryptographischen Signatur.

Das Terminal ist konfiguriert zur Durchführung der folgenden Schritte:
- Authentisieren gegenüber dem digitalen Token;
- Aufbauen einer Lese-Schreib-Verbindung mit dem digitalen Token;
- Erhalten von Auslesedaten der Datenstruktur des digitalen Tokens durch einen Lese-Zugriff des Terminals;
- Übermitteln eines Hashwertes von zumindest einem Teil der Datenstruktur an die Signaturvorrichtung, wobei der Hashwert entweder Teil der Auslesedaten ist oder auf Basis der Auslesedaten erzeugt wurde.

Die Signaturvorrichtung umfasst einen geheimen Schlüssel, welcher sich von bisher für das digitale Token verwendeten kryptographischen Schlüsseln unterscheidet. Die Signaturvorrichtung ist konfiguriert zur Durchführung der folgenden Schritte:
- Erstellen der ergänzenden kryptographischen Signatur für den Hashwert durch die Signaturvorrichtung unter Verwendung des geheimen Schlüssels;
- Übermitteln der ergänzenden kryptographischen Signatur an das Token.

Optional kann das digitale Token noch konfiguriert sein zum
- Ergänzen, in Verwaltungsdaten des digitalen Tokens, eines Flags, welches kennzeichnet, dass das digitale Token die ergänzende kryptographische Signatur beinhaltet, sowie eines Zeigers auf die ergänzende kryptographische Signatur.

Das Ergänzen des Flags und Zeigers kann beispielsweise durch einen Schreibzugriff des Terminals auf das digitale Token erfolgen. Alternativ können Flag und Zeiger auch durch das digitale Token ergänzt werden.

Weitere Details der Komponenten des elektronischen Systems und der einzelnen Verfahrensschritte, sowie die erzielte vorteilhafte Wirkung wurden weiter oben in dieser Schutzrechtsanmeldung bereits im Kontext des erfindungsgemäßen Verfahrens beschrieben.

Beispielsweise kann die Signaturvorrichtung weiterhin konfiguriert sein zum Übermitteln der ergänzenden kryptographischen Signatur an das Terminal und das Terminal kann weiterhin konfiguriert ist zum Erhalten der ergänzenden kryptographischen Signatur von der Signaturvorrichtung und zum Übertragen der ergänzenden kryptographischen Signatur an das Token. Dadurch wird der Effekt erzielt, dass die gesicherte aufgebaute Verbindung zwischen Terminal und digitalem Token genutzt werden kann und kein weiterer sicherer Kanal zwischen dem digitalen Token und der Signaturvorrichtung aufgebaut werden muss.

Das elektronische System zur Ergänzung der ergänzenden Signatur kann weiterhin konfiguriert zur Durchführung der oben beschriebenen optionalen Verfahrensschritte. Insbesondere sind die Komponenten des elektronischen Systems, d.h. die Signaturvorrichtung, das Terminal und das digitale Token jeweils konfiguriert zur Durchführung der Verfahrensschritte die im Kontext des Verfahrens als durchgeführt von oder durchführbar durch die jeweilige Komponente beschrieben wurden.

In einem weiteren Aspekt umfasst die vorliegende Anmeldung weiterhin ein elektronisches System zur Überprüfung der Echtheit einer auf einem digitalen Token gespeicherten ergänzenden kryptographischen Signatur, die mit einem ersten elektronischen System wie oben beschrieben erstellt wurde. Das elektronische System zur Überprüfung der Echtheit der ergänzenden kryptographischen Signatur wird im Folgenden auch als "zweites elektronisches System bezeichnet. Das zweite elektronische System umfasst das digitales Token und ein zweites Terminal. Hierbei umfasst das digitale Token eine Datenstruktur und ist konfiguriert zur Durchführung der folgenden Schritte:
- Authentisieren gegenüber dem zweiten Terminal; und

Das zweite Terminal ist weiterhin konfiguriert zur Durchführung der folgenden Schritte:
- Authentisieren gegenüber dem digitalen Token,
- Bestimmen eines Vorhandenseins der ergänzenden kryptographischen Signatur auf dem digitalen Token sowie eines Speicherorts der ergänzenden kryptographischen Signatur auf dem digitalen Token;
- Auslesen mindestens eines Teils der Datenstruktur des digitalen Tokens , der ausgelesene Teil der Datenstruktur umfassend zu verifizierende Daten;
- Auslesen der ergänzenden kryptographischen Signatur des Tokens unter Verwendung des bestimmten Speicherorts;
- Verifizieren der Echtheit der zu verifizierenden Daten unter Verwendung der ergänzenden kryptographischen Signatur und einem der ergänzenden kryptographischen Signatur zugeordneten öffentlichen Schlüssel.

Das Vorhandensein der ergänzenden digitalen Signatur sowie ihr Speicherort kann beispielsweise umgesetzt werden, indem ein Flags und ein dem Flag zugeordneter Zeiger auf die Speicheradresse der ergänzenden kryptographischen Signatur durch das zweite Terminal ausgelesen und dann zum Auslesen der ergänzenden kryptographischen Signatur verwendet werden.

Alternativ könnte die Verifizierung der Echtheit der zu verifizierenden Daten auch durch ein anderes Gerät durchgeführt werden, an das die entsprechenden Daten von dem zweiten Terminal übertragen wurden.

Nochmals mit anderen Worten zusammengefasst, die Erfindung betrifft Verfahren und elektronische System zur Ergänzung und Überprüfung einer ergänzenden kryptographischen Signatur in einem digitalen Token. Hierzu wird nach gegenseitiger Authentisierung des digitalen Tokens und eines Terminals eine ergänzende kryptographische Signatur durch eine Signaturvorrichtung auf Basis eines bisher nicht für dieses digitale Token verwendeten geheimen Schlüssels erstellt und im digitalen Token gespeichert. Die ergänzende Signatur kann dann unter Verwendung eines zugeordneten öffentlichen Schlüssels verifiziert werden.

Grundsätzlich wird angemerkt, dass alle Merkmale, die in Bezug auf bestimmte Aspekte oder Ausführungsformen der Erfindung offenbart werden, auch mit anderen Aspekten oder Ausführungsformen der Erfindung technisch sinnvoll kombinierbar sind. Dies gilt auch über unterschiedliche technische Gegenstände und Gegenstandskategorien hinweg. Insbesondere gilt dies auch auszugsweise für einzelne Merkmale, solange hierin nicht explizit darauf hingewiesen wird oder es durch einen technischen Widerspruch offensichtlich ist, dass zwischen bestimmten Merkmalen ein untrennbarer funktional-technischer Zusammenhang besteht, der zur Ausführung der Erfindung beibehalten werden muss.

Im Folgenden wird die Erfindung anhand von Ausführungsbeispielen und deren skizzenhafter Darstellung erläutert. Hierbei zeigen:
- Figur 1A: ein Blockschema einer Ausgestaltung des beschriebenen elektronischen Systems zur Ergänzung einer ergänzenden kryptographischen Signatur in einem ID Token;
- Figur 1B: ein Blockschema einer weiteren Ausgestaltung des beschriebenen elektronischen Systems zur Ergänzung der ergänzenden kryptographischen Signatur in dem ID Token;
- Figur 2A: ein Blockschema einer Ausgestaltung des beschriebenen elektronischen Systems zur Überprüfung der Echtheit der ergänzenden kryptographischen Signatur des ID Tokens;
- Figur 2B: ein Blockschema einer weiteren Ausgestaltung des beschriebenen elektronischen Systems zur Überprüfung der Echtheit der ergänzenden kryptographischen Signatur des ID Tokens;
- Figur 4: ein Sequenzdiagramm einer Ausgestaltung des beschriebenen Verfahrens zur Ergänzung der ergänzenden kryptographischen Signatur in dem ID Token;
- Figur 5: ein Sequenzdiagramm einer weiteren Ausgestaltung des beschriebenen Verfahrens zur Ergänzung der ergänzenden kryptographischen Signatur in dem ID Token;
- Figur 6: ein Sequenzdiagramm einer Ausgestaltung des beschriebenen Verfahrens zur Überprüfung der ergänzenden kryptographischen Signatur des ID Tokens.

Die nachfolgend beschriebenen elektronischen Systeme und Verfahren dienen der zusätzlichen kryptographischen Absicherung von ID Token, wie Chipkarten oder Sicherheitsdokumenten. Aktuelle Chipkarten wie der Reisepass oder Personalausweis erlauben eine Authentifizierung und Echtheitsüberprüfung basierend auf verschiedenen kryptographischen Verfahren, die in den meisten Fällen auf asymmetrischen Kryptoverfahren wie RSA oder ECC basieren. Durch die mögliche Entwicklung von Quantencomputern in der nahen Zukunft sind RSA oder ECC basierte Kryptoverfahren möglicherweise gefährdet, da durch Verwendung von Shors Algorithmus oder ähnlichen Verfahren die kryptographischen Verfahren RSA und ECC gebrochen werden können, so dass eine Entschlüsselung durch Nichtberechtigte möglich werden könnte.

Insbesondere enthalten Reisepässe und Personalausweise Identitätsdaten in der ePass-Anwendung, die durch eine im Sicherheitsobjekt EF.SOD abgelegte Signatur geschützt sind. Zur Erstellung dieser Signatur werden aktuell üblicherweise RSA- oder ECC-basierte Kryptoverfahren verwendet. Durch die Entwicklung eines möglichen kryptographisch relevanten Quantencomputers wären diese Signaturen unsicher.

Die Daten der eID Anwendung des Personalausweises sind bisher nicht über eine Signatur geschützt, werden aber auch durch RSA- bzw. ECC-basierte Kryptoverfahren abgesichert und wären im Falle eines kryptographisch relevanten Quantencomputers daher ebenfalls nicht mehr sicher.

Daher besteht ein Bedarf an zusätzlichen oder alternativen Ansätzen zur Absicherung von Chip-basierten Sicherheitsdokumenten bzw. den darauf gespeicherten Identitätsdaten. Insbesondere werden im Folgenden Ausführungsformen von Verfahren und Systemen beschrieben, die die Identitätsdaten dieser Sicherheitsdokumente wie Reisepass oder Personalausweis gegen Manipulation durch einen Angriff unter Verwendung eines Quantencomputers zu schützen.

Es ist im Folgenden zu beachten, dass bei einer beschriebenen Übertragung von Daten von einer ersten Komponente an eine zweite Komponente üblicherweise sowohl ein Lese-zugriff der zweiten Komponente auf die erste Komponente als auch ein Senden der Daten von der ersten Komponente an die zweite Komponente oder ein Schreibzugriff von der ersten Komponente auf die zweite Komponente in Frage kommt und alle diese Optionen von der Formulierung "Übertragung" umfasst sind.

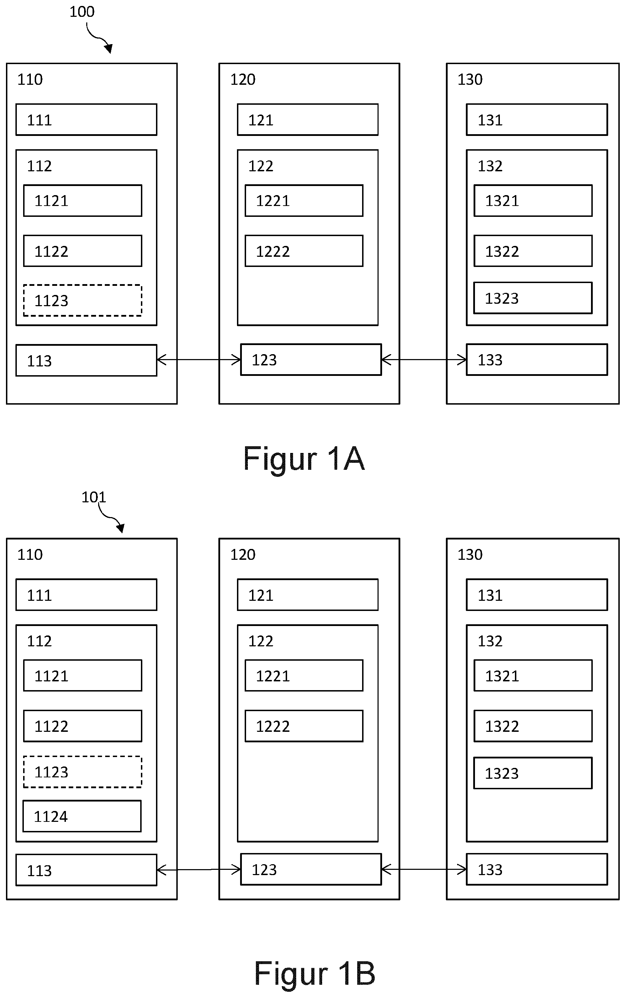

Figur 1A zeigt hierzu eine schematische Darstellung eines elektronischen Systems 100 zur Ergänzung einer ergänzenden Signatur 1123 in einem ID Token 110, welches im weiteren auch als Chipkarte 110 bezeichnet wird.

Die Chipkarte 110 beinhaltet einen Mikroprozessor 111, einen internen Speicher 112 und eine Kommunikationsschnittstelle 118. Im internen Speicher 112 ist zumindest eine Datenstruktur 1121 umfasst und Instruktionen 1122 die auf dem Mikroprozessor 111 ausgeführt werden können. Die Datenstruktur 1121 kann beispielsweise als logische Datenstruktur (Logical Data Structure, LDS) oder ein Teil der Datengruppen der LDS gemäß der oben referenzierten ICAO Spezifikation 9303 verstanden werden.

Die Chipkarte 110 enthält weiterhin eine Kommunikationsschnittstelle 113, über die eine Datenverbindung zu einem Terminal 120 aufgebaut werden kann. Das Terminal 120 kann hierbei beispielsweise ein Kartenlesegerät 120 in einer Behörde sein. Das Kartenlesegerät 120 verfügt über die notwendigen Berechtigungen, um eine Datenverbindung mit der Chipkarte 110 herzustellen, beispielsweise unter Verwendung des EAC, BAC oder PACE Protokolls.

Das Kartenlesegerät 120 verfügt ebenfalls über einen Prozessor 121 und einen internen Speicher 122 sowie über eine mindestens eine Kommunikationsschnittstelle 123, über die ein Datenaustausch mit der Chipkarte 110 und einer Signaturvorrichtung 130 möglich ist. Der interne Speicher 122 des Kartenlesegeräts 120 umfasst vorzugsweise Daten 1221 und Instruktionen 1222 zur Durchführung der Funktionalitäten des Kartenlesegeräts 120.

Nach dem Aufbau einer sicheren Verbindung zwischen der Chipkarte 110 und dem Kartenlesegerät 120 können bestimmte Daten, auch als Auslesedaten bezeichnet, der Datenstruktur 1221 von dem Kartenlesegerät 120 ausgelesen werden. Bei den Auslesedaten handelt es sich zum Beispiel um personenbezogene Daten die auf der Chipkarte 110 gespeichert sind. Auch können in den Auslesedaten Sicherheitsdaten enthalten sein, beispielsweise bereits vorhandene Signaturen und Hashwerte der Auslesedaten.

Das elektronische System 100 umfasst weiterhin auch eine Signaturvorrichtung 130, die beispielsweise dem Kartenlesegerät örtlich oder logisch zugeordnet sein kann. Die Signaturvorrichtung 130 umfasst ebenfalls einen Prozessor 131, einen internen Speicher 132 und eine Kommunikationsschnittstelle 133. Über die Kommunikationsschnittstelle 133 kann die Signaturvorrichtung eine Verbindung zu dem Kartenlesegerät 120 aufbauen. Diese Verbindung kann durch eine gegenseitige Authentisierung abgesichert werden, dies ist aber nicht in allen Fällen notwendig, da Kartenlesegerät 120 und Signaturvorrichtung 130örtlich und/oder dauerhaft miteinander verbunden sein können.

Der Speicher 132 der Signaturvorrichtung 130 umfasst ebenfalls vorzugsweise Daten 1321, Instruktionen 1322 zur Ausführung von Funktionen der Signaturvorrichtung 130 auf dem Prozessor 131 und einen geheimen Schlüssel 1323. Der geheime Schlüssel 1323 ist in einer Ausführungsform ein PQC-Schlüssel, der in einem geschützten Speicherbereich der Signaturvorrichtung 130 abgespeichert ist vorzugsweise nicht exportiert und/oder ausgelesen werden kann. Der geheime Schlüssel 1323 kann alternativ auch innerhalb der Daten 1321 der Signaturvorrichtung 130 gespeichert sein.

Die Signaturvorrichtung 130 ist dann konfiguriert, um vom Kartenlesegerät 120 empfangene Auslesedaten und/oder den Hashwert der Auslesedaten unter Verwendung des geheimen Schlüssels 1323 zu signieren und somit eine ergänzende Signatur 1123 für die Auslesedaten zu erstellen. Der geheime Schlüssel 1323 ist hierbei ein Schlüssel, der sich von den Schlüsseln, die bisher für die Chipkarte 110 verwendet wurden, unterscheidet. Die so erstellte ergänzende Signatur wird dann von der Signaturvorrichtung 130 an die Chipkarte 110 übertragen, beispielsweise unter Verwendung des Kartenlesegeräts 120 als Zwischengerät, über welches die Verbindung zwischen Signaturvorrichtung 130 und Chipkarte 110 hergestellt wird.

Die ergänzende Signatur 1123 wird dann von der Chipkarte im internen Speicher 112 der Chipkarte 110 gespeichert und es werden in Verwaltungsdaten der Chipkarte 110 Informationen über die ergänzende Signatur 1123 hinzugefügt. Die Verwaltungsdaten der Chipkarte sind hierbei entweder Teil der Datenstrukur 1121 oder sie sind in einem Bereich des internen Speichers 112 hinterlegt, der separat von der Datenstruktur 1121 abgespeichert ist. In den Verwaltungsdaten wird beispielsweise ein Flag ergänzt, beispielsweise in Form eines Bits oder Bytes, welches anzeigt, dass eine ergänzende Signatur 1123 auf der Chipkarte 110 gespeichert ist. Außerdem wird beispielsweise ein Zeiger, vorzugsweise in Form einer Speicheradresse, abgelegt, der auf die ergänzende Signatur 1123 zeigt und somit einen Zugriff auf die ergänzende Signatur 1123 ermöglicht.

Figur 1B zeigt als alternative Ausführungsform des mit Bezug auf Figur 1A beschriebenen elektronischen Systems 100 ein weiteres elektronisches System 101. Zusätzlich zu den bereits für Figur 1A beschriebenen Komponenten enthält die Chipkarte 110 im internen Speicher 112 bereits zu Beginn des Verfahrens eine erste Signatur 1124, die basierend auf einem klassischen Verschlüsselungsverfahren wie ECC oder RSA erstellt wurde.

Das Kartenlesegerät 120 kann nun zusätzlich durch Instruktionen konfiguriert sein, die erste Signatur 1124 in Bezug auf die Auslesedaten zu verifizieren werden. Hierzu braucht das Kartenlesegerät 120 lediglich Zugriff auf einen der Signatur zugeordneten öffentlichen Schlüssel. Weitere Details zur Verifikation bzw. Überprüfung der Signaturen werden mit Bezug auf die folgenden Figuren beschrieben.

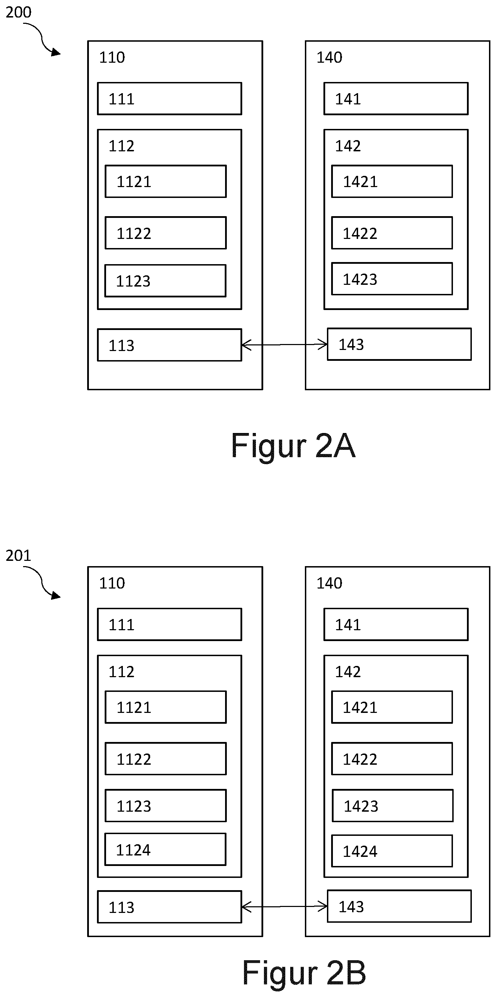

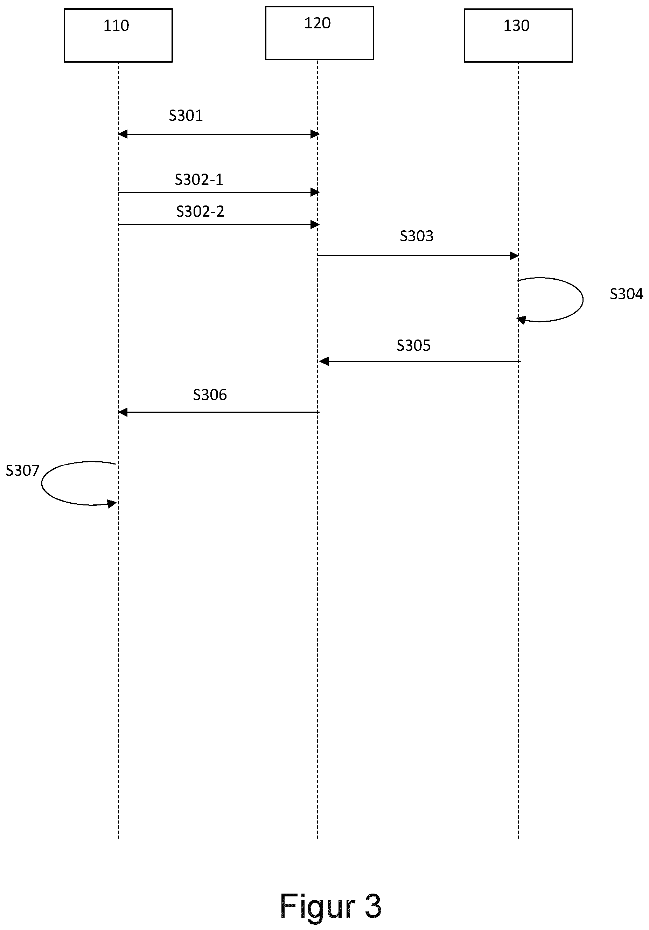

Figur 2A zeigt ein elektronisches System 200 zur Überprüfung der Echtheit einer ergänzenden Signatur, die wie oben beschrieben durch ein elektronisches System 100 zur Chipkarte 110 hinzugefügt wurde.

Das elektronische System 200 umfasst die Chipkarte 110, wobei auf dieser Chipkarte bereits eine ergänzende Signatur ergänzt wurde. Der interne Speicher der Chipkarte 112 enthält daher die ergänzende Signatur, das Flag und den Zeiger auf die ergänzende Signatur.

Das elektronische System 200 umfasst neben der Chipkarte 110 ein Überprüfungsgerät 140, welches sich üblicherweise von dem Kartenlesegerät 120, das bei der Ergänzung der ergänzenden Signatur verwendet wurde, unterscheidet. Beispielsweise könnte das bei der Ergänzung der ergänzenden Signatur verwendete Kartenlesegerät 120 sich bei einer Behörde wie einem Bürgeramt befinden, während das Überprüfungsgerät beispielsweise bei einem Grenzposten angeordnet sein kann. Es ist aber auch möglich, dass das Kartenlesegerät 120 und das Überprüfungsgerät 140 identisch sind.

Das Überprüfungsgerät umfasst in seinem internen Speicher 142 den der ergänzenden Signatur zugeordneten öffentlichen Schlüssel. Alternativ kann der öffentliche Schlüssel auch in einer externen Datenbank gespeichert sein und vom Überprüfungsgerät 140 nur zum Zweck der Überprüfung abgerufen werden.

Die Chipkarte 110 und das Überprüfungsgerät 140 verfügen weiterhin über Kommunikationsschnittstellen 113 und 143, über die eine Verbindung zum Datenaustausch zwischen der Chipkarte 110 und dem Überprüfungsgerät 140 hergestellt werden kann. Zum Aufbau einer derartigen Verbindung ist eine gegenseitige Authentisierung, beispielsweise unter Verwendung des EAC oder BAC Protokolls zwischen der Chipkarte 110 und dem Überprüfungsgerät notwendig.

Nach dem Aufbau einer sicheren Verbindung liest das Überprüfungsgerät 140 die zu verifizierenden Daten aus der Chipkarte 110 aus. Hierbei handelt es sich beispielsweise um personenbezogene Daten, die zur Personenkontrolle an einer internationalen Grenze verwendet werden können. Außerdem liest das Überprüfungsgerät das Flag aus und greift dann unter Verwendung des dem Flag zugeordneten Zeigers auf die ergänzende Signatur 1123 der Chipkarte 110 zu und liest die ergänzende Signatur 1123 ebenfalls aus.

Die ergänzende Signatur 1123 wird dann durch das Überprüfungsgerät 140 verwendet um, unter Verwendung des der ergänzenden Signatur 1123 zugeordneten öffentlichen Schlüssels 1423, die Echtheit der zu verifizierenden Daten zu bestätigen.

Durch die Überprüfung kann sichergestellt werden, dass die zu verifizierenden Daten nicht manipuliert wurden. Nachfolgend muss dann im Rahmen der Personenkontrolle noch ein visueller Abgleich der Person, die die Chipkarte vorzeigt mit den verifizierten Daten erfolgen, da die Echtheit einer Signatur keine Aussage darüber erlaubt, ob die Daten kopiert wurden.

Alternativ kann, statt der Verwendung eines Flags, das Vorhandensein der ergänzenden Signatur und ihr Speicherort auch auf andere Art und Weise realisiert werden. Beispielsweise kann die Information über das Vorhandensein der ergänzenden Signatur extern gespeichert sein oder die ergänzende Signatur kann an einer vorab festgelegten Speicheradresse gespeichert sein, die in Abwesenheit einer ergänzenden Signatur einen vordefinierten Defaultwert aufweist.

Figur 2B zeigt ebenso wie Figur 2A ein elektronisches System 201 zur Überprüfung einer ergänzenden Signatur, aber in einer weiteren Ausführungsform. Das elektronisches System 201 umfasst ebenso wie das elektronische System 200 die Chipkarte 110 und ein Überprüfungsgerät 140. Im Unterschied zu der in Figur 2A gezeigten Ausführungsform ist bei der Chipkarte 110 des elektronischen Systems 201 zusätzlich eine erste Signatur 1124 gespeichert, die bereits vor dem Ergänzen der ergänzenden Signatur 1123 vorhanden war.

Weiterhin verfügt das Überprüfungsgerät 140 des elektronischen Systems 201 über einen ersten öffentlichen Schlüssel 1424, der der ersten Signatur 1124 zugeordnet ist. Somit ist es bei dem elektronischen System aus Figur 2B möglich, zusätzlich zu der ergänzenden Signatur 1123 auch noch die erste Signatur 1124 zu überprüfen. Auf diesem Wege kann die Manipulationsfreiheit durch mehrere Signaturen bestätigt werden.

Die ergänzende Signatur 1123 wird unter Verwendung eines asymmetrischen post-quanten Verfahrens (PQC-Verfahren) erstellt. D.h. es wird ein asymmetrisches Schlüsselpaar verwendet, welches nicht durch einen kryptographisch relevanten Quantencomputer auf wesentlich einfachere Art als durch einen klassischen Computer gebrochen werden kann. Als wesentlich einfacher kann hierbei eine Änderung der Komplexitätsklasse verstanden werden. Mögliche Verfahren zur Generierung der post-quanten Schlüsselpaare basieren auf gitterbasierter Kryptographie, Hash-basierter Kryptographie, multivariaten Polynomen, fehlerkorrigierenden Codes und/oder supersingulären elliptischen Kurven.

Die zusätzlich vorhandene erste Signatur hingegen wird durch ein klassisches Kryptoverfahren erzeugt und verifiziert, beispielsweise basierend auf RSA oder ECC.

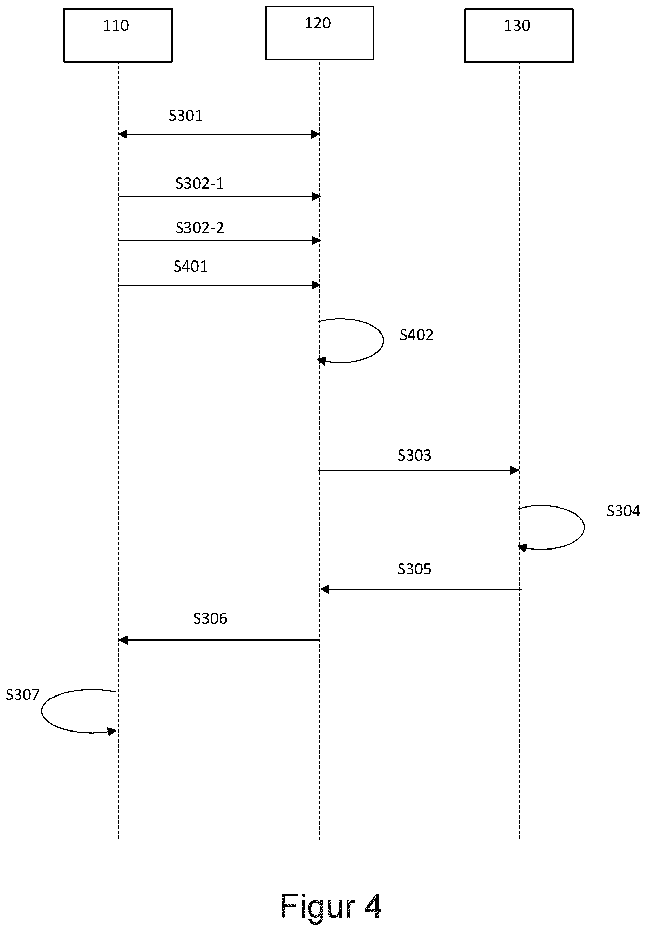

Figur 4 zeigt ein Ablaufdiagramm der Interaktionen des Chipkarte 110 des Kartenlesegeräts 120 und des Signaturvorrichtung 130 bei der Generierung einer ergänzenden Signatur 1123. Zunächst findet in Schritt S301 eine gegenseitige Authentisierung zwischen Chipkarte 110 und Kartenlesegerät 120 statt. Nach der Authentisierung werden in Schritt S302-1 Auslesedaten der Chipkarte und in Schritt S302-2 ein den Auslesedaten zugeordneter Hashwert von der Chipkarte an das Kartenlesegerät übertragen. Der Hashwert wird dann in Schritt S303 weiter vom Kartenlesegerät an die Signaturvorrichtung 130 übertragen.

In Schritt S304 erstellt die Signaturvorrichtung unter Verwendung eines PQC-Schlüssels eine ergänzende Signatur 1123, die dann in Schritt S305 von der Signaturvorrichtung zurück an das Kartenlesegerät 120 übertragen wird. Vom Kartenlesegerät 120 wird dann in Schritt S306 die ergänzenden Signatur 1123 an die Chipkarte 110 übertragen. Die Chipkarte 110 speichert dann die empfangene ergänzende Signatur 1123 in ihrem internen Speicher 112 und ergänzt weiterhin in Schritt S307 ein Flag und einen Zeiger auf die ergänzende Signatur in ihren Verwaltungsdaten. Alternativ kann statt einem in der Chipkarte gespeicherten Flag und Zeiger die Information über die in der Chipkarte 110 gespeicherte ergänzende Signatur 1123 auch an anderer Stelle, beispielsweise in einer externen Datenbank, abgelegt werden.

Die ergänzende Signatur 1123 kann somit beispielsweise mittels eines Chip-Updates in das bereits auf der Chipkarte vorhandene EF.SOD eingebracht werden, oder das EF.SOD kann so verändert werden, dass hinterher die ergänzende Signatur 1123 umfasst ist. Alternativ kann eine neue Datengruppe in der Datenstruktur der Chipkarte 110 ergänzt werden, wobei die neue Datengruppe dann die ergänzende Signatur 1123 umfasst.

Vorzugsweise sind die vorher im EF-SOD vorhandenen Daten auch nach der Ergänzung der ergänzenden Signatur 1123 noch vorhanden, so dass eine Rückwärtskompatibilität gewährleistet werden kann.

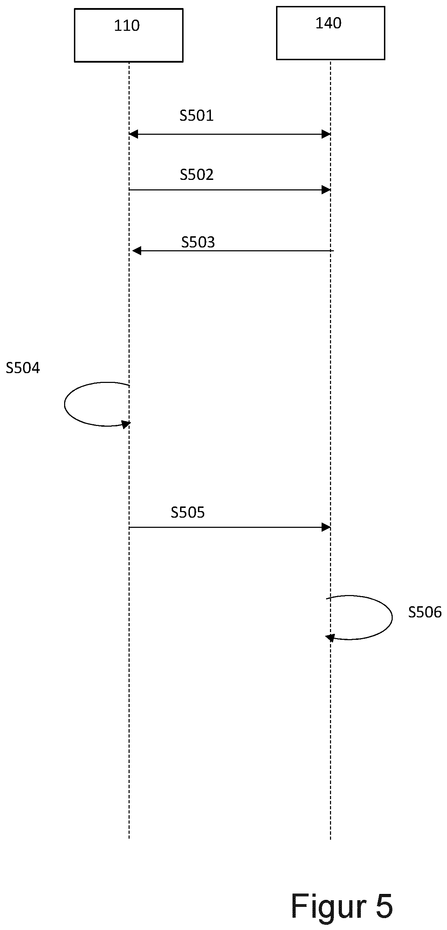

Figur 5 zeigt ein alternatives Verfahren zur Ergänzung einer ergänzenden Signatur 1123 in der Chipkarte 110. Hierbei werden zu den bereits im Kontext von Figur 4 beschriebenen Verfahrensschritten noch zwei weitere Schritte ergänzt.

Nach dem Aufbau der sicheren Verbindung zwischen der Chipkarte und dem Kartenlesegerät in Schritt S301 werden zusätzlich zu den Auslesedaten und dem Hashwert auch noch in Schritt S401 eine auf der Chipkarte 110 gespeicherte erste Signatur 1124 übertragen.

Diese erste Signatur 1124 wird dann im Schritt S402 durch das Kartenlesegerät 120 anhand einer der ersten Signatur 1124 zugeordneten öffentlichen Schlüssel 1424 verifiziert. Erst nachdem die Manipulationsfreiheit der Auslesedaten durch die erste Signatur 1124 bestätigt wurde, werden die weiteren Schritte zur Ergänzung der ergänzenden Signatur 1123 ausgeführt.

Dieses Verfahren ermöglicht es zu einem Zeitpunkt vor der Existenz kryptographisch relevanter Quantencomputer, PQC-Signaturen auf eine sichere Art und Weise und basierend auf der aktuell durch eine ECC-basierte Signatur mit hoher Wahrscheinlichkeit garantierten Manipulationssicherheit zu ergänzen. Angesichts der langen Laufzeit von Chipkarten wie Reisepässen und Personalausweisen kann dann zu einem Zeitpunkt in der Zukunft die Verifizierung auf die PQC-Signatur geändert werden, wobei die PQC Signatur durch die vorher vorhandene ECC-Signatur abgesichert ist.

Figur 6 zeigt ein Ablaufdiagramm des Verfahrens zur Überprüfung der Echtheit der auf der Chipkarte 110 gespeicherten Daten unter Verwendung der ergänzenden Signatur 1123.

Hierzu wird wieder zunächst in Schritt S501 eine sichere Verbindung zwischen der Chipkarte 110 und dem Überprüfungsgerät 140 aufgebaut, beispielsweise durch eine gegenseitige Authentifizierung mit BAC oder EAC-Protokoll.

Nach dem Aufbau der sicheren Verbindung werden Informationen zum Flag von der Chipkarte 110 an das Überprüfungsgerät 140 übertragen, beispielsweise durch einen Lesezugriff des Überprüfungsgeräts. Die Informationen zum Flag könnten alternativ auch auf anderem Wege von dem Überprüfungsgerät empfangen werden, beispielsweise durch einen Zugriff auch eine externe Datenbank.

Nachdem durch das Überprüfungsgerät 140 anhand des Flags festgestellt wurde, dass eine ergänzende Signatur 1123 auf der Chipkarte 110 gespeichert ist, wird diese ergänzende Signatur 1123 vom Überprüfungsgerät 140 in Schritt S503 von der Chipkarte 110 angefordert und dann gemäß dem Zeiger der Chipkarte 110 von der Chipkarte 110 in Schritt S504 ausgelesen und in Schritt S505 an das Überprüfungsgerät 140 übertragen. Weiterhin werden ebenfalls die Verifikationsdaten von der Chipkarte 110 an das Überprüfungsgerät 140 übertragen. Das Überprüfungsgerät 140 kann dann anhand der ergänzenden Signatur 1123 unter Verwendung des der ergänzenden Signatur zugeordneten öffentlichen Schlüssels 1423 die Echtheit, bzw. Manipulationsfreiheit, der von der Chipkarte 110 erhaltenen Verifikationsdaten überprüfen in Schritt S506.

Nach der erfolgreichen Überprüfung können die anhand der ergänzenden Signatur 1123 verifizierten Daten im Rahmen einer Personenkontrolle verwendet werden.

Somit kann die ergänzende, vorzugsweise PQC-sichere, Signatur verwendet werden um die Quantensicherheit von Chipkarten und andere Sicherheitsdokumente zu erhöhen.

### Bezugszeichenliste

- 100: elektronisches System
- 101: elektronisches System
- 110: Chipkarte
- 111: Mikroprozessor der Chipkarte
- 112: Speicher der Chipkarte
- 1121: Datenstruktur der Chipkarte
- 1122: Instruktionen der Chipkarte
- 1123: ergänzenden Signatur
- 1124: erste Signatur
- 113: Kommunikationsschnittstelle der Chipkarte
- 120: Kartenlesegerät
- 121: Prozessor des Kartenlesegeräts
- 122: Speicher des Kartenlesegeräts
- 1221: Daten des Kartenlesegeräts
- 1222: Instruktionen des Kartenlesegeräts
- 123: Kommunikationsschnittstelle des Kartenlesegeräts
- 130: Signaturvorrichtung
- 131: Prozessor der Signaturvorrichtung
- 132: Speicher der Signaturvorrichtung
- 1321: Daten der Signaturvorrichtung
- 1322: Instruktionen der Signaturvorrichtung
- 1323: geheimer Schlüssel
- 133: Kommunikationsschnittstelle der Signaturvorrichtung
- 140: Überprüfungsgerät
- 141: Prozessor des Überprüfungsgeräts
- 142: Speicher des Überprüfungsgeräts
- 1421: Daten des Überprüfungsgeräts
- 1422: Instruktionen des Überprüfungsgeräts
- 1423: öffentlicher ergänzender Schlüssel
- 1424: öffentlicher erster Schlüssel
- 143: Kommunikationsschnittstelle des Überprüfungsgeräts
- 200: elektronisches System
- 201: elektronisches System
- S301: gegenseitige Authentisierung
- S302-1: Übertragung von der Chipkarte zum Kartenlesegerät
- S302-2: Übertragung von der Chipkarte zum Kartenlesegerät
- S303: Übertragung vom Kartenlesegerät zur Signaturvorrichtung
- S304: Erstellung der ergänzenden Signatur
- S305: Übertragung von der Signaturvorrichtung zum Kartenlesegerät
- S306: Übertragung vom Kartenlesegerät zur Chipkarte
- S307: Speichern auf der Chipkarte
- S401: Übertragung von der Chipkarte zum Kartenlesegerät
- S402: Überprüfen erste Signatur
- S501: gegenseitige Authentisierung
- S502: Übertragung von der Chipkarte zum Kartenlesegerät
- S503: Übertragung vom Kartenlesegerät zur Chipkarte
- S504: Auslesen der ergänzenden Signatur
- S505: Übertragung von der Chipkarte zum Kartenlesegerät
- S506: Überprüfen ergänzende Signatur

Die folgenden Aspekte sind unter anderem auch von dieser Anmeldung umfasst:
1. Verfahren zur Ergänzung einer ergänzenden kryptographischen Signatur in einem digitalen Token, das digitale Token umfassend eine Datenstruktur, das Verfahren umfassend die folgenden Schritte:
   - Gegenseitige Authentisierung des digitalen Tokens und eines Terminals;
   - Empfangen, durch das Terminal, von Auslesedaten der Datenstruktur des digitalen Tokens;
   - Übermitteln, durch das Terminal, eines Hashwertes von zumindest einem Teil der Datenstruktur an eine Signaturvorrichtung, wobei der Hashwert Teil der Auslesedaten ist oder auf Basis der Auslesedaten erzeugt wurde;
   - Erstellen der ergänzenden kryptographischen Signatur für den Hashwert durch die Signaturvorrichtung unter Verwendung eines geheimen Schlüssels der Signaturvorrichtung, wobei der geheime Schlüssel sich von bisher für das digitale Token verwendeten kryptographischen Schlüsseln unterscheidet;
   - Übertragen der ergänzenden kryptographischen Signatur an das digitalen Token; und
   - Speichern der ergänzenden kryptographischen Signatur in einem Speicher des digitalen Tokens.
2. Verfahren gemäß Aspekt 1, weiterhin umfassend:
   - Ergänzen eines Flags, welches kennzeichnet, dass das digitale Token die ergänzende kryptographische Signatur beinhaltet, sowie eines Zeigers auf die ergänzenden kryptographische Signatur.
3. Verfahren gemäß Aspekt 2, wobei das Flag und der digitale Zeiger in Verwaltungsdaten des digitalen Tokens ergänzt werden.
4. Verfahren gemäß einem der vorhergehenden Aspekte, wobei der geheime Schlüssel mit einem kryptographischen Verfahren erstellt wurde, welches sich von kryptographischen Verfahren, mit denen die bisher für das digitale Token verwendeten Schlüssel erstellt wurden, unterscheidet.
5. Verfahren gemäß einem der vorhergehenden Aspekte, wobei der geheime Schlüssel ein Post-Quanten-Kryptographie-Schlüssel ist.
6. Verfahren gemäß einem der vorhergehenden Aspekte, wobei der geheime Schlüssel ein basierend auf einem der folgenden asymmetrischen kryptographischen Verfahren erstellter privater Schlüssel ist: gitterbasierte Kryptographie, Hash-basierte Kryptographie, multivariate Polynome, fehlerkorrigierende Codes und/oder supersinguläre elliptische Kurven.
7. Verfahren gemäß einem der vorherigen Aspekte, das digitale Token weiterhin umfassend eine erste kryptographische Signatur, die von einer ersten Signaturvorrichtung unter Verwendung eines ersten privaten Schlüssels erstellt wurde, wobei die ergänzende kryptographische Signatur zusätzlich zur ersten kryptographischen Signatur auf dem digitalen Token gespeichert wird.
8. Verfahren gemäß Aspekt 7, wobei der erste private Schlüssel mit einem kryptographischen Verfahren basierend auf RSA oder ECC erstellt wurde.
9. Verfahren gemäß Aspekt 7 oder 8, weiterhin umfassend, nach dem Auslesen der Auslesedaten:
   - Auslesen der ersten kryptographischen Signatur des digitalen Tokens; und
   - Verifizieren der Auslesedaten unter Verwendung der ersten kryptographischen Signatur.
10. Verfahren gemäß einem der Aspekte 7 bis 9, wobei die Datenstruktur, die erste kryptographische Signatur und/oder die ergänzende kryptographische Signatur in einem geschützten Speicherbereich des digitalen Tokens gespeichert sind.
11. Verfahren gemäß einem der Aspekte 7 bis 10, das digitale Token weiterhin umfassend ein Sicherheitsobjekt, welches mindestens einen Hashwert gebildet über zumindest einem Teil der Datenstruktur und die erste kryptographische Signatur, gebildet über den mindestens einen Hashwert, beinhaltet, wobei die ergänzende kryptographische Signatur in dem Sicherheitsobjekt gespeichert wird.
12. Verfahren gemäß einem der vorhergehenden Aspekte, wobei das Empfangen der Auslesedaten der Datenstruktur umfasst: Auslesen der Auslesedaten aus dem digitalen Token durch einen Lese-Zugriff des Terminals auf das digitale Token.
13. Verfahren gemäß einem der vorhergehenden Aspekte, weiterhin umfassend, nach dem Empfangen der Auslesedaten: Erzeugen, durch das Terminal, des Hashwertes basierend auf mindestens einem Teil der Auslesedaten.
14. Verfahren gemäß einem der vorhergehenden Aspekte, wobei das digitale Token eine Chipkarte und/oder ein digitaler Chip eines Sicherheitsdokuments ist.
15. Verfahren gemäß einem der vorhergehenden Aspekte, wobei das Terminal ein elektronisches Gerät ist, welches ein Lesegerät umfasst und das einen Lesezugriff und/oder einen Schreibzugriff auf das Token ermöglicht.
16. Verfahren zur Überprüfung der Echtheit einer auf einem digitalen Token gespeicherten Datenstruktur, das digitale Token umfassend eine ergänzende kryptographische Signatur die durch das Verfahren gemäß einem der Aspekte 1 - 14 ergänzt wurde, das Verfahren zur Überprüfung der Echtheit umfassend die folgenden Schritte:
   - Gegenseitige Authentisierung des digitalen Tokens und eines zweiten Terminals;
   - Bestimmen, durch das zweite Terminal, eines Vorhandenseins der ergänzenden kryptographischen Signatur auf dem digitalen Token sowie eines Speicherorts der ergänzenden kryptographischen Signatur auf dem digitalen Token;
   - Auslesen mindestens eines Teils der Datenstruktur des digitalen Tokens durch einen Lese-Zugriff des zweiten Terminals, der ausgelesene Teil der Datenstruktur umfassend zu verifizierende Daten;
   - Auslesen, durch einen Lese-Zugriff des zweiten Terminals, der ergänzenden kryptographischen Signatur unter Verwendung des bestimmten Speicherorts;
   - Verifizieren, durch das zweite Terminal, der Echtheit der zu verifizierenden Daten unter Verwendung der ergänzenden kryptographischen Signatur und einem der ergänzenden kryptographischen Signatur zugeordneten öffentlichen Schlüssel.
17. Verfahren gemäß Aspekt 16, das Verfahren weiterhin umfassend:
   - Bestimmen, durch das Terminal, des Vorhandenseins der ergänzenden kryptographischen Signatur durch Auslesen eines Flags, welches das Vorhandensein der ergänzenden kryptographischen Signatur anzeigt;
   - Bestimmen des Speicherorts der ergänzenden kryptographischen Signatur unter Verwendung eines dem Flag zugeordneten digitalen Zeigers.
18. Elektronisches System zur Ergänzung einer ergänzenden kryptographischen Signatur in einem digitalen Token, das elektronische System umfassend das digitale Token, ein Terminal und eine Signaturvorrichtung,
   das digitale Token umfassend eine Datenstruktur, und konfiguriert zum:
      - Authentisieren gegenüber dem Terminal;
      - Aufbauen einer Lese-Schreib-Verbindung mit dem Terminal;
      - Speichern einer vom Terminal übertragenen ergänzenden kryptographischen Signatur;
   das Terminal konfiguriert zum:
      - Authentisieren gegenüber dem digitalen Token;
      - Aufbauen einer Lese-Schreib-Verbindung mit dem digitalen Token;
      - Empfangen von Auslesedaten der Datenstruktur des digitalen Tokens;
      - Übermitteln eines Hashwertes von zumindest einem Teil der Datenstruktur an die Signaturvorrichtung, wobei der Hashwert entweder Teil der Auslesedaten ist oder auf Basis der Auslesedaten erzeugt wurde;
   die Signaturvorrichtung umfassend einen geheimen Schlüssel, welcher sich von bisher für das digitale Token verwendeten kryptographischen Schlüsseln unterscheidet, die Signaturvorrichtung konfiguriert zum:
      - Erstellen der ergänzenden kryptographischen Signatur für den Hashwert durch die Signaturvorrichtung unter Verwendung des geheimen Schlüssels;
      - Übermitteln der ergänzenden kryptographischen Signatur an das Token.
19. Elektronisches System gemäß Aspekt 18, wobei das digitale Token weiterhin konfiguriert ist zum
   - Ergänzen, in Verwaltungsdaten des digitalen Tokens, eines Flags, welches kennzeichnet, dass das digitale Token die ergänzende kryptographische Signatur beinhaltet, sowie eines Zeigers auf die ergänzende kryptographische Signatur.
20. Elektronisches System gemäß Aspekt 18 oder 19, wobei die Signaturvorrichtung weiterhin konfiguriert ist zum
   - Übermitteln der ergänzenden kryptographischen Signatur an das Terminal; und das Terminal weiterhin konfiguriert ist zum
   - Erhalten der ergänzenden kryptographischen Signatur von der Signaturvorrichtung und
   - zum Übertragen der ergänzenden kryptographischen Signatur an das Token.
21. Elektronisches System gemäß einem der Aspekte 16 bis 18, das elektronische System weiterhin konfiguriert zur Durchführung der Verfahrensschritte gemäß den Aspekten 1 bis 14.
22. Elektronisches System zur Überprüfung der Echtheit einer auf einem digitalen Token gespeicherten ergänzenden kryptographischen Signatur, die mit einem ersten elektronischen System gemäß einem der Aspekte 15 bis 19 erstellt wurde, das elektronische System umfassend das digitales Token und ein zweites Terminal,
   das digitale Token umfassend eine Datenstruktur, und konfiguriert zum
      - Authentisieren gegenüber dem zweiten Terminal; und
   das zweite Terminal konfiguriert zum:
      - Authentisieren gegenüber dem digitalen Token,
      - Bestimmen eines Vorhandenseins der ergänzenden kryptographischen Signatur auf dem digitalen Token sowie eines Speicherorts der ergänzenden kryptographischen Signatur auf dem digitalen Token;
      - Auslesen mindestens eines Teils der Datenstruktur des digitalen Tokens der ausgelesene Teil der Datenstruktur umfassend zu verifizierende Daten;
      - Auslesender ergänzenden kryptographischen Signatur des Tokens unter Verwendung des bestimmten Speicherorts; und
      - Verifizieren der Echtheit der zu verifizierenden Daten unter Verwendung der ergänzenden kryptographischen Signatur und einem der ergänzenden kryptographischen Signatur zugeordneten öffentlichen Schlüssel.
23. Elektronisches System gemäß Aspekt 22, wobei das zweite Terminal weiterhin konfiguriert ist zum:
   - Auslesen eines Flags, welches das Vorhandensein der ergänzenden kryptographischen Signatur anzeigt; und
   - Auslesen der ergänzenden kryptographischen Signatur des Tokens unter Verwendung eines dem Flag zugeordneten digitalen Zeigers.

## Patentansprüche

1. Verfahren zur Ergänzung einer ergänzenden kryptographischen Signatur (1123) in einem digitalen Token (110), das digitale Token (110) umfassend eine Datenstruktur (1121), das Verfahren umfassend die folgenden Schritte:
- Gegenseitige Authentisierung (S301) des digitalen Tokens (110) und eines Terminals (120);
- Empfangen (S302-1), durch das Terminal (120), von Auslesedaten der Datenstruktur (1121) des digitalen Tokens (110);
- Übermitteln (S302-2), durch das Terminal (120), eines Hashwertes von zumindest einem Teil der Datenstruktur (1121) an eine Signaturvorrichtung (130), wobei der Hashwert Teil der Auslesedaten ist oder auf Basis der Auslesedaten erzeugt wurde;
- Erstellen (S304) der ergänzenden kryptographischen Signatur (1123) für den Hashwert durch die Signaturvorrichtung (130) unter Verwendung eines geheimen Schlüssels (1323) der Signaturvorrichtung, wobei der geheime Schlüssel (1323) sich von bisher für das digitale Token (110) verwendeten kryptographischen Schlüsseln unterscheidet;
- Übertragen (S305, S306) der ergänzenden kryptographischen Signatur (1123) an das digitalen Token (110); und
- Speichern (S307) der ergänzenden kryptographischen Signatur (1123) in einem Speicher (112) des digitalen Tokens (110).

2. Verfahren gemäß Anspruch 1, weiterhin umfassend:
- Ergänzen eines Flags, welches kennzeichnet, dass das digitale Token (110) die ergänzende kryptographische Signatur (1123) beinhaltet, sowie eines Zeigers auf die ergänzenden kryptographische Signatur (1123);
wobei vorzugsweise das Flag und der digitale Zeiger in Verwaltungsdaten des digitalen Tokens (110) ergänzt werden.

3. Verfahren gemäß einem der vorhergehenden Ansprüche, wobei der geheime Schlüssel (1323) mit einem kryptographischen Verfahren erstellt wurde, welches sich von kryptographischen Verfahren, mit denen die bisher für das digitale Token (110)verwendeten Schlüssel erstellt wurden, unterscheidet;
wobei der geheime Schlüssel (1323) vorzugsweise ein Post-Quanten-Kryptographie-Schlüssel ist.

4. Verfahren gemäß einem der vorherigen Ansprüche, das digitale Token (110) weiterhin umfassend eine erste kryptographische Signatur (1124), die von einer ersten Signaturvorrichtung unter Verwendung eines ersten privaten Schlüssels erstellt wurde, wobei die ergänzende kryptographische Signatur (1123) zusätzlich zur ersten kryptographischen Signatur (1124) auf dem digitalen Token (110) gespeichert wird, wobei der erste private Schlüssel vorzugsweise mit einem kryptographischen Verfahren basierend auf RSA oder ECC erstellt wurde.

5. Verfahren gemäß Anspruch 4, weiterhin umfassend, nach dem Auslesen der Auslesedaten:
- Auslesen der ersten kryptographischen Signatur (1124) des digitalen Tokens (110); und
- Verifizieren der Auslesedaten unter Verwendung der ersten kryptographischen Signatur (1124).

6. Verfahren gemäß einem der Ansprüche 4 oder 5, wobei die Datenstruktur (1121), die erste kryptographische Signatur (1124) und/oder die ergänzende kryptographische Signatur (1123) in einem geschützten Speicherbereich des digitalen Tokens (110) gespeichert sind.

7. Verfahren gemäß einem der Ansprüche 4 bis 6, das digitale Token (110) weiterhin umfassend ein Sicherheitsobjekt, welches mindestens einen Hashwert gebildet über zumindest einem Teil der Datenstruktur (1121) und die erste kryptographische Signatur, gebildet über den mindestens einen Hashwert, beinhaltet, wobei die ergänzende kryptographische Signatur (1123) in dem Sicherheitsobjekt gespeichert wird.

8. Verfahren gemäß einem der vorhergehenden Ansprüche, wobei das Empfangen der Auslesedaten der Datenstruktur (1121) umfasst: Auslesen der Auslesedaten aus dem digitalen Token (110) durch einen Lese-Zugriff des Terminals (120) auf das digitale Token (110);
und/oder
das Verfahren weiterhin umfassend, nach dem Empfangen der Auslesedaten: Erzeugen, durch das Terminal (120), des Hashwertes basierend auf mindestens einem Teil der Auslesedaten.

9. Verfahren gemäß einem der vorhergehenden Ansprüche, wobei das digitale Token (110) eine Chipkarte und/oder ein digitaler Chip eines Sicherheitsdokuments ist;
und/oder
wobei das Terminal (120) ein elektronisches Gerät ist, welches ein Lesegerät umfasst und das einen Lesezugriff und/oder einen Schreibzugriff auf das Token (110) ermöglicht.

10. Verfahren zur Überprüfung der Echtheit einer auf einem digitalen Token (110) gespeicherten Datenstruktur (1121), das digitale Token (110) umfassend eine ergänzende kryptographische Signatur (1123) die durch das Verfahren gemäß einem der Ansprüche 1 - 9 ergänzt wurde, das Verfahren zur Überprüfung der Echtheit umfassend die folgenden Schritte:
- Gegenseitige Authentisierung (S501) des digitalen Tokens (110) und eines zweiten Terminals (140);
- Bestimmen, durch das zweite Terminal (140), eines Vorhandenseins der ergänzenden kryptographischen Signatur auf dem digitalen Token (110) sowie eines Speicherorts der ergänzenden kryptographischen Signatur auf dem digitalen Token (110);
- Auslesen mindestens eines Teils der Datenstruktur (1121) des digitalen Tokens (110) durch einen Lese-Zugriff des zweiten Terminals (140), der ausgelesene Teil der Datenstruktur (1121) umfassend zu verifizierende Daten;
- Auslesen, durch einen Lese-Zugriff des zweiten Terminals (140), der ergänzenden kryptographischen Signatur unter Verwendung des bestimmten Speicherorts;
- Verifizieren, durch das zweite Terminal (140), der Echtheit der zu verifizierenden Daten unter Verwendung der ergänzenden kryptographischen Signatur (1123) und einem der ergänzenden kryptographischen Signatur (1123) zugeordneten öffentlichen Schlüssel (1323).

11. Verfahren gemäß Anspruch 10, das Verfahren weiterhin umfassend:
- Bestimmen, durch das Terminal (140), des Vorhandenseins der ergänzenden kryptographischen Signatur durch Auslesen eines Flags, welches das Vorhandensein der ergänzenden kryptographischen Signatur (1123) anzeigt;
- Bestimmen des Speicherorts der ergänzenden kryptographischen Signatur unter Verwendung eines dem Flag zugeordneten digitalen Zeigers.

12. Elektronisches System (100, 101) zur Ergänzung einer ergänzenden kryptographischen Signatur (1123) in einem digitalen Token (110), das elektronische System (100, 101) umfassend das digitale Token (110), ein Terminal (120) und eine Signaturvorrichtung (130),
das digitale Token (110) umfassend eine Datenstruktur (1121), und konfiguriert zum:
- Authentisieren gegenüber dem Terminal (120);
- Aufbauen einer Lese-Schreib-Verbindung mit dem Terminal (120);
- Speichern einer vom Terminal (120) übertragenen ergänzenden kryptographischen Signatur (1123);
das Terminal (120) konfiguriert zum:
- Authentisieren gegenüber dem digitalen Token (110);
- Aufbauen einer Lese-Schreib-Verbindung mit dem digitalen Token (110);
- Empfangen von Auslesedaten der Datenstruktur des digitalen Tokens (110);
- Übermitteln eines Hashwertes von zumindest einem Teil der Datenstruktur (1121) an die Signaturvorrichtung (130), wobei der Hashwert entweder Teil der Auslesedaten ist oder auf Basis der Auslesedaten erzeugt wurde;
die Signaturvorrichtung (130) umfassend einen geheimen Schlüssel (1323), welcher sich von bisher für das digitale Token verwendeten kryptographischen Schlüsseln unterscheidet, die Signaturvorrichtung (130) konfiguriert zum:
- Erstellen der ergänzenden kryptographischen Signatur (1123) für den Hashwert durch die Signaturvorrichtung (130) unter Verwendung des geheimen Schlüssels (1323);
- Übermitteln der ergänzenden kryptographischen Signatur (1123) an das Token (110).

13. Elektronisches System (199, 101) gemäß Anspruch 12, wobei das digitale Token (110) weiterhin konfiguriert ist zum
- Ergänzen, in Verwaltungsdaten des digitalen Tokens (110), eines Flags, welches kennzeichnet, dass das digitale Token (110) die ergänzende kryptographische Signatur (1123) beinhaltet, sowie eines Zeigers auf die ergänzende kryptographische Signatur (1123),
und/oder,
wobei die Signaturvorrichtung (130) weiterhin konfiguriert ist zum
- Übermitteln der ergänzenden kryptographischen Signatur (1123) an das Terminal (120); und
das Terminal (120) weiterhin konfiguriert ist zum
- Erhalten der ergänzenden kryptographischen Signatur (1123) von der Signaturvorrichtung (130) und
- zum Übertragen der ergänzenden kryptographischen Signatur (1123) an das Token (110).

14. Elektronisches System (100, 101) gemäß einem der Ansprüche 12 bis 13, das elektronische System (100, 101) weiterhin konfiguriert zur Durchführung der Verfahrensschritte gemäß den Ansprüchen 1 bis 9.

15. Elektronisches System (200, 201) zur Überprüfung der Echtheit einer auf einem digitalen Token (110) gespeicherten ergänzenden kryptographischen Signatur (1123), die mit einem ersten elektronischen System (100, 101) gemäß einem der Ansprüche 12 bis 14 erstellt wurde, das elektronische System umfassend das digitales Token (110) und ein zweites Terminal (140),
das digitale Token (110) umfassend eine Datenstruktur (1121), und konfiguriert zum
- Authentisieren gegenüber dem zweiten Terminal (140); und
das zweite Terminal (140) konfiguriert zum:
- Authentisieren gegenüber dem digitalen Token (110),
- Bestimmen eines Vorhandenseins der ergänzenden kryptographischen Signatur auf dem digitalen Token (110) sowie eines Speicherorts der ergänzenden kryptographischen Signatur auf dem digitalen Token (110);
- Auslesen mindestens eines Teils der Datenstruktur des digitalen Tokens der ausgelesene Teil der Datenstruktur umfassend zu verifizierende Daten;
- Auslesender ergänzenden kryptographischen Signatur des Tokens (110) unter Verwendung des bestimmten Speicherorts; und
- Verifizieren der Echtheit der zu verifizierenden Daten unter Verwendung der ergänzenden kryptographischen Signatur (1123) und einem der ergänzenden kryptographischen Signatur zugeordneten öffentlichen Schlüssel (1423).
